# EUROPEAN PATENT APPLICATION

(11) **EP 0 955 083 A2**
(43) Date of publication of application: **10.11.1999**
(21) Application number: 99302730.9
(22) Date of filing: 07.04.1999
(51) Int. Cl.: B01J 8/00, B65G 53/04

(54) **Conveying of hot particulate material**

(30) Priority: 15.04.1998 GB 9807850
(71) Applicant: Celtic Vacuum Limited, Tenby, Pembrokeshire SA70 8EP (GB)
(72) Inventor: John, Ronald Evan Carey, Wiston, Haverfordwest SA62 4QB (GB)
(74) Representative: Davies, Gregory Mark

(57) **Abstract**

An inlet permits hot particulate material to be drawn into the apparatus from an outlet port of a storage vessel and pass along a flowpath including a throat portion leading to a downstream diverging section. An outlet for pressurised conveying gas is positioned downstream of the inlet and directs a stream of conveying gas toward the throat portion. The apparatus is cooled in the region of the flowpath. The invention is particularly suited to removing "hot" condition catalyst from petro-chemical catalyst converter vessels. This is because the operational down time is minimised as a result of the ability to remove the catalyst material at a higher temperature than would be possible with known techniques.

## Description

The present invention relates to the conveying of hot particulate material, and in particular to apparatus for conveying hot particulate material from a storage vessel.

The invention is particularly concerned with situations in which hot particulate material, such as hot catalyst, must be removed from a vessel, such as from a reactor vessel.

Conventionally, hot "catalyst" material (which is typically in powder form) is removed from the base of petro-chemical catalyst converters, below the fluidising nozzle level, by means of flooding the base of the catalyst converter with water to cool the catalyst material. The water/material mixture is subsequently removed by means vacuum apparatus, the removed material going to waste.

An improved conveying system has now been devised.

According to the present invention, there is provided conveying apparatus for conveying hot particulate material from a vessel, which apparatus comprises:
i) inlet means permitting the hot particulate material to be drawn into the apparatus from an outlet port of the storage vessel;
ii) a flowpath for the particulate material, the flowpath communicating with the inlet means and including a throat portion leading to a downstream diverging section;
iii) an outlet for pressurised conveying gas, the outlet being orientated downstream of the inlet means and arranged to direct a stream of conveying gas toward the throat portion; and,
iv) cooling means for cooling the apparatus in the region of the flowpath.

The outlet for the pressurised conveying gas is typically aligned coaxially with the throat portion and spaced therefrom. It is important to maintain the alignment of the conveying gas outlet and the throat portion in order to maintain the efficacy of the apparatus; in view of the heat generated by the hot particulate material it is important to avoid misalignment of the apparatus components caused by thermal expansion. The cooling means is arranged to cool the apparatus to ensure that the alignment of the conveying gas outlet and the throat portion is maintained when conveying the hot particulate material. It is preferred that the cooling means dispenses cooling fluid, preferably a relatively high heat capacity liquid such as water.

The cooling means is preferably arranged to direct cooling fluid to impinge upon a region of the apparatus defining the flowpath. Desirably the cooling means comprises one or more fluid sprays, jets or the like, arranged to direct respective cooling fluid streams to impinge upon a region of the apparatus defining the flowpath.

The region of the flowpath to which the cooling fluid is directed preferably comprises a conduit connecting and/or including the throat portion and diverging section. It is preferred that the cooling means comprises a plurality of fluid sprays, jets or the like, spaced about the conduit and arranged to direct respective cooling fluid streams to impinge upon the of the conduit from different directions.

Desirably a housing or casing is provided for the flowpath, the cooling means being arranged to dispense cooling fluid to the relevant region of the flowpath within the interior of the housing or casing. The housing or casing is preferably provided with a drain port permitting cooling fluid to drain from the housing. The drained cooling fluid may be reticulated for re-use.

It is preferred that the flowpath for the particulate material extends upstream of the throat portion so as to encompass the conveying gas outlet. In this region it is preferred that the flowpath comprises a conduit section, preferably extending upstream substantially beyond the conveying gas outlet and advantageously.

The outlet for the pressurised conveying gas typically comprises a nozzle or jet and is spaced from the throat portion of the flowpath. A feed arrangement for directing conveying gas (typically compressed air) to exit the outlet is provided, the feed arrangement comprising a conduit arrangement arranged to pass through a wall portion (or portions) of the conduit section defining the flowpath. In one embodiment a branched conduit arrangement feeds conveying gas to the outlet, separate branches preferably passing through separate wall portions (preferably opposed wall portions) of a conduit section defining the flowpath. It is preferred that the conduit or conduits comprising the conveying gas feeder arrangement is/are streamlined in the region spanning the material flowpath.

Desirably a shaped flow deflector is positioned in the flowpath upstream of the pressurised conveying gas outlet so as to direct conveyed material around the conveying gas outlet.

One or more of the throat portion, the pressurised conveying gas outlet, and the shaped flow deflector preferably comprise removable components (for replacement/repair purposes) which preferably comprise material having good abrasion resistance properties.

The throat and diverging sections of the flowpath are conventionally interconnected by a mixing section which is typically cylindrical.

It is preferred that the flowpath comprising the diverging section and/or the mixing section is fabricated of relatively thick, preferably cast, abrasion resistant, material.

According to a further aspect, the invention provides a method of removing catalyst from a vessel using vacuum handling apparatus, characterised in that the catalyst is in a hot condition when removed from the vessel and a portion of the vacuum flowpath conveying the catalyst is forcibly cooled.

Preferred features of the method according to the invention correspond to the preferred features described in relation to the apparatus.

The invention will now be further described in a specific embodiment, by way of example only, and with reference to the accompanying drawings in which:

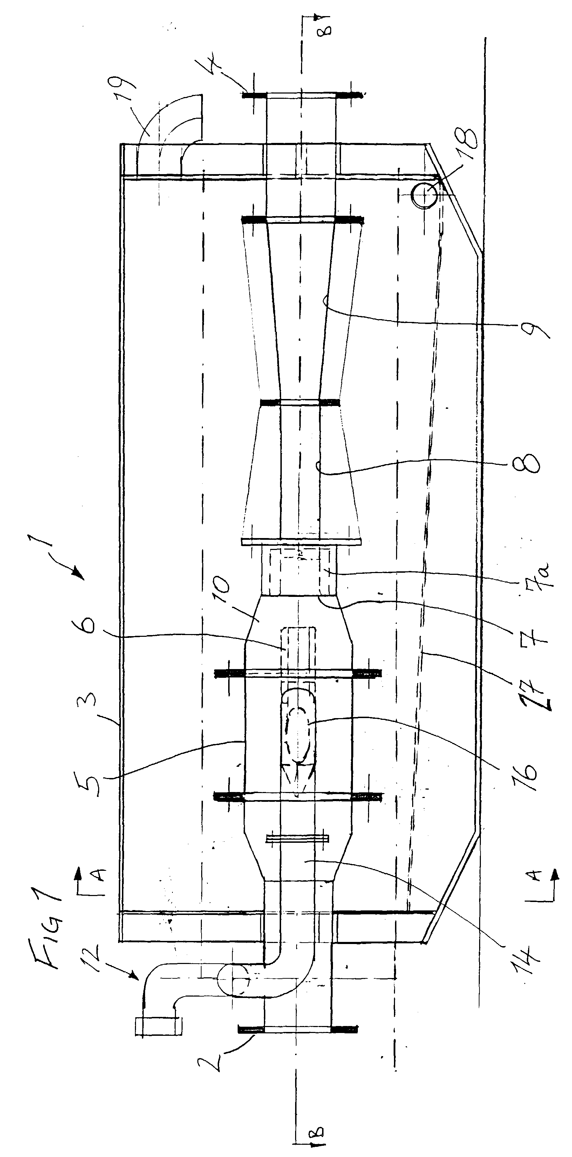

Figure 1 is a schematic sectional, side view of apparatus according to the invention;

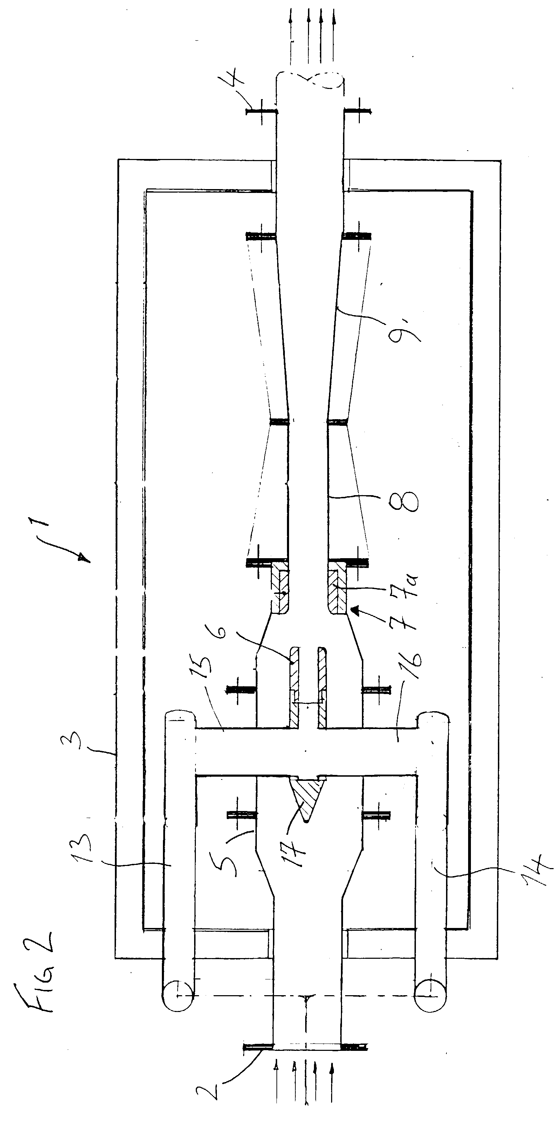

Figure 2 is a schematic sectional view of the apparatus along B-B in figure 1 and;

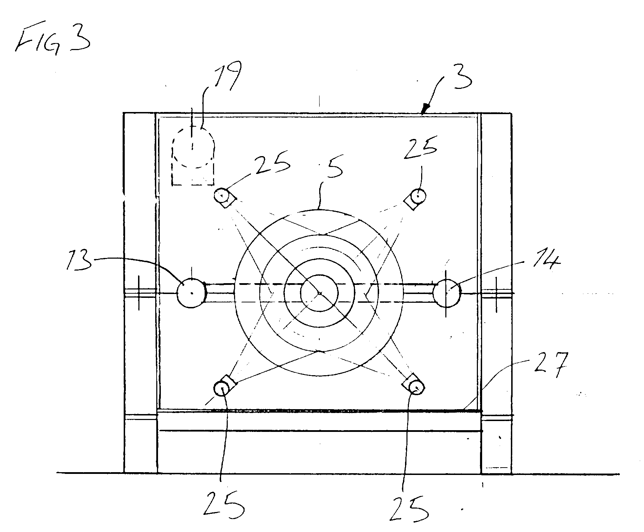

Figure 3 is a schematic end view of the apparatus along A-A in figure 1.

Referring to the drawings, there is shown apparatus (generally designated 1) for use in collecting spent catalyst powder in the "hot" condition from a catalyst converter (not shown) accessible via a port below the fluidising nozzle level.

The apparatus 1 includes an inlet coupling connection 2 arranged to be connected to a pipe (not shown) along which "hot" catalyst powder is drawn from the storage vessel. Inlet coupling connection 2 is provided at one end of a conduit flowpath defined by tubular conduit sections 5,7,8,9 extending through a fabricated steel housing 3 to an outlet port 4. Outlet port 4 is arranged to be connected to a downstream storage vessel or vacuum tanker (not shown) for collection of the catalyst powder for ultimate disposal or further processing.

The general principle of operation of the apparatus corresponds to that of a known "jet pump" or air venturi pump. The system includes a compressed air nozzle 6 spaced from and arranged coaxially with a downstream throat section 7 which leads, via a cylindrical mixing chamber section 8, to a diffusing section 9.

The compressed air stream exiting nozzle 6 and directed into throat 7 causes turbulence in the converging section 10 of the flowpath and therefore reduced pressure in that region. This causes material to be drawn into the flowpath from the catalyst vessel. The air/powder mixture passes at high velocity through the throat 7 to the mixing chamber 8 where the air and catalyst powder is thoroughly mixed. The mixture then passes on to the defusing section 9 which acts as a recovery chamber where the velocity of the air/powder mixture falls to the required conveying velocity.

The compressed air is directed to the main nozzle 6 from externally of the apparatus via a compressed air manifold arrangement 12 including branches 13, 14 extending through the outer housing 3. Respective perpendicularly connected manifold sections 15, 16 pass through the cylindrical conduit wall 5 and feed compressed air to the main nozzle 6. The outer walls of manifold sections 15, 16 are streamlined to provide as little interruption as possible to the flow of material along the conduit 5. Upstream of main nozzle 6 is a coned deflector 17 arranged to smoothly deflect the catalyst material flow around nozzle 6.

Nozzle 6 is manufactured of abrasion resistant material and throat 7 includes a throat ring 7a of abrasion resistant material. Both the throat ring 7a and the nozzle 6 are replaceable in circumstances were the conveying efficiency of the apparatus drops below acceptable levels due to damage or wear of the throat ring 7a and nozzle 6. Outer housing 3 and conduit 5 have respective joints on their horizontal axes permitting assembly and disassembly for maintenance purposes.

The overall construction of the apparatus is of heavy duty wear resistant material in view of the abrasive nature of the material being conveyed, and also the high temperature environment in which the apparatus is used.

The material flow conduit 5 upstream of throat 7 is manufactured of thick walled carbon steel tubing and flanges. The throat ring 7a and the section of the flowpath downstream up to and including the diffuser section 9 is formed of thick walled cast abrasive material such as cast carbon steel. The use of heavy duty material for the nozzle and material flowpath conduit aids in reducing any misalignment which may occur due to differential thermal expansion between components, which would otherwise reduce the efficiency of operation of the apparatus.

An important feature of the apparatus is that a cooling system is provided. The cooling system comprises several water jet spray heads 25 arranged internally of housing 3 and orientated to direct respective spray streams of cooling water to impinge with the outer casing of conduit 5 in the region of the nozzle 6 and throat 7.

The water is piped to spray heads 15 from externally of housing 3 by means of a cooling water manifold arrangement (not shown). Housing 3 is provided with an internal sloping floor portion 27 and a water drainer 18 towards to lowermost point thereof, a steam outlet 19 is also provided to permit steam to vent to atmosphere following heating of the water upon impingement with the hot conduit wall surface 5. The cooling system ensures that differential thermal expansion, and therefore misalignment of nozzle 6 and throat 7 is kept to a minimum during operation.

The apparatus provides significant advantages over known techniques of removing "hot" condition catalyst from petro-chemical catalyst converter vessels. This is because the operational down time is minimised as a result of the ability to remove the catalyst material at a higher temperature than would be possible with known techniques. Flooding of the converter vessel is furthermore not required; the volume of material removed is therefore minimised because it is possible to remove the catalyst in dry form.

## Claims

1. Conveying apparatus for conveying hot particulate material from a vessel, which apparatus comprises:
i) inlet means permitting the hot particulate material to be drawn into the apparatus from an outlet port of the storage vessel;
ii) a flowpath for the particulate material, the flowpath communicating with the inlet means and including a throat portion leading to a downstream diverging section;
iii) an outlet for pressurised conveying gas, the outlet being orientated downstream of the inlet means and arranged to direct a stream of conveying gas toward the throat portion; and,
iv) cooling means for cooling the apparatus in the region of the flowpath.

2. Conveying apparatus according to claim 1, wherein the outlet for the pressurised conveying gas is aligned substantially coaxially with the throat portion and spaced therefrom.

3. Conveying apparatus according to claim 1 or claim 2, wherein the cooling means dispenses cooling fluid, preferably a relatively high heat capacity liquid such as water.

4. Conveying apparatus according to any preceding claim, wherein:
the cooling means is arranged to direct cooling fluid to impinge upon a region of the apparatus defining the flowpath; and/or,
the cooling means comprises one or more fluid sprays, jets or the like, arranged to direct respective cooling fluid streams to impinge upon a region of the apparatus defining the flowpath.

5. Conveying apparatus according to any preceding claim, wherein the region of the flowpath to which the cooling fluid is directed comprises a conduit connecting and/or including the throat portion and diverging section.

6. Conveying apparatus according to any preceding claim, wherein the cooling means comprises a plurality of fluid sprays, jets or the like, spaced about the flowpath and arranged to direct respective cooling fluid streams to impinge upon the of the flowpath from different directions.

7. Conveying apparatus according to any preceding claim, further comprising a housing or casing through which the flowpath extends, the cooling means being arranged to dispense cooling fluid to the relevant region of the flowpath within the interior of the housing or casing, preferably wherein the housing or casing is provided with a drain port permitting cooling fluid to drain from the housing or casing.

8. Conveying apparatus according to any preceding claim, wherein the flowpath for the particulate material extends upstream of the throat portion so as to encompass the conveying gas outlet.

9. Conveying apparatus according to any preceding claim, further comprising a gas feed arrangement for directing conveying gas to exit the outlet, the feed arrangement comprising a conduit arranged to pass through a wall portion of a conduit section defining the flowpath, the conduit comprising the conveying gas feeder arrangement preferably having a streamlined profile in the region spanning the material flowpath.

10. Conveying apparatus according to any preceding claim, wherein a shaped flow deflector is positioned in the flowpath upstream of the pressurised conveying gas outlet so directing conveyed material around the conveying gas outlet.

11. Conveying apparatus according to any preceding claim, wherein the throat and diverging sections of the flowpath are interconnected by a mixing section.

12. A method of removing hot catalyst from a vessel using conveying apparatus according to any preceding claim.

13. A method of removing catalyst from a vessel using vacuum handling apparatus, characterised in that the catalyst is in a hot condition when removed from the vessel and a portion of the vacuum flowpath conveying the catalyst is forcibly cooled.
